**Europäisches Patentamt**

**European Patent Office**

**Office européen des brevets**

(19)

(11) Numéro de publication: **0 140 932**
**B1**

(12)
# FASCICULE DE BREVET EUROPÉEN

(45) Date de publication du fascicule du brevet:
25.11.87

(21) Numéro de dépôt: 84901590.4

(22) Date de dépôt: 13.04.84

(86) Numéro de dépôt international:
PCT/FR 84/00105

(87) Numéro de publication internationale:
WO 84/04206 (25.10.84 Gazette 84/25)

(51) Int. Cl.⁴: **H 01 M 6/18,** H 01 M 10/36,
**H 01 M 4/58**

(54) **GENERATEURS ELECTROCHIMIQUES COMPORTANT UNE ELECTRODE POSITIVE ET UN ELECTROLYTE A BASE DE MATERIAUX VITREUX.**

(30) Priorité: 15.04.83 FR 8306237

(43) Date de publication de la demande:
15.05.85 Bulletin 85/20

(45) Mention de la délivrance du brevet:
25.11.87 Bulletin 87/48

(84) Etats contractants désignés:
AT BE CH DE FR GB LI LU NL SE

(56) Documents cité:
EP-A-0 000 785
EP-A-0 068 307
FR-A-2 387 192
FR-A-2 428 617
US-A-3 160 531

Journal of the Electrochemical Society, volume 127, No. 12, December 1980. (Manchester, New Hampshire, US) K. Nassau et al:"Rapidly quenched tungstate and molybdate composition containing lithium glass formation and ionic conductivity",pages 2743-2747,see page 2747 left hand column, lines 6-28

(73) Titulaire: **CENTRE NATIONAL DE LA RECHERCHE SCIENTIFIQUE (CNRS), 13 Quai Anatole France, F-75700 Paris (FR)**

(72) Inventeur: **DUCLOT, Michel- Joseph, Le Clos des Gentons, F-38570 Theys (FR)**
Inventeur: **PAGNIER, Thierry, 14, allée du Veuderet, F-38100 Grenoble (FR)**

(74) Mandataire: **Peaucelle, Chantal, S.C. Ernest Gutmann - Yves Plasseraud 67, boulevard Haussmann, F-75008 Paris (FR)**

EP 0 140 932 B1

## Description

"Générateurs électrochimiques comportant une électrode positive et un électrolyte à base de matériaux vitreux"

L'invention a pour objet des générateurs électrochimiques comportant une électrode positive et un électrolyte a base de matériaux vitreux.

La mise en oeuvre de verres comme matériaux d'électrodes a déjà été étudiée. Mais les systèmes proposés avec comme électrolytes des sels fondus fonctionnent a température élevée et n'ont pas fait l'objet d'applications industrielles.

Dans la demande de brevet EP-A-0 068 307, on décrit des générateurs électrochimiques comportant un électrolyte solide formé par une composition vitreuse conductrice de cations. Parmi les électrolytes décrits, ceux à base de sulfure sont dopés par des halogénures de lithium. Les matériaux de l'électrode positive proposés sont en général cristallisés et sont mélangés avec de l'électrolyte solide afin d'améliorer le contact à l'interface électrode positive-électrolyte. Ces moyens ne permettent pas cependant d'assurer de manière satisfaisante une continuité électrique de l'électrolyte à l'électrode positive.

Les travaux effectués par les inventeurs les ont amenés à constater qu'en les associant avec certains électrolytes vitreux et non des sels fondus, il était possible d'élaborer des chaînes électrochimiques de performances élevées fonctionnant à une température de l'ordre de l'ambiante et de mise en oeuvre aisée permettant de les réaliser suivant les techniques classiques de l'électronique.

L'invention a donc pour but de fournir des générateurs électrochimiques à haute densité d'énergie renfermant comme électrodes positives des matériaux résultant de l'insertion d'éléments dans un système vitreux de base ou les verres correspondants ne comportant pas d'éléments insérés et comme électrolytes des matériaux vitreux assurant le transport de l'élément à insérer.

Elle vise également à fournir de nouveaux matériaux vitreux utilisables en particulier pour l'élaboration d'électrodes positives.

Les générateurs électrochimiques de l'invention comportent:

-une électrode positive à base d'un matériau vitreux de formule générale I

$$A_x(1-y) \, F_a X_b \, Y \, M_c X_d \qquad (I)$$

dans laquelle $F_a X_b$ représente un ou plusieurs systèmes formateurs de réseau et $M_c X_d$ un système dit actif c'est-à-dire capable de capter ou de fournir des électrons dans lesquels

- $\underline{F}$ est un élément choisi parmi Si, Ge, B, P, Al, Nb, As ou Sb;
- $\underline{M}$ représente un métal de transition pouvant exister sous plusieurs degrés d'oxydation de +1 à +7 et existant dans le matériau vitreux de l'électrode positive sous deux des degrés d'oxydation qu'il peut présenter;
- $\underline{X}$ représente de l'oxygène, du soufre ou du sélénium;
- $\underline{a}, \underline{b}, \underline{c}$ et $\underline{d}$ sont les indices correspondant à la stoechiométrie des éléments dans le système formateur ou dans le système actif considéré;
- $\underline{y}$ est un nombre compris entre 0 et 1 (ces deux valeurs étant exclues);
- $\underline{A}$ représente un élément alcalin ou de l'argent monovalent:
- $\underline{x}$ est nul ou représente un nombre non nul dont la valeur dépend du nombre d'electrons et/ou des sites électroniques disponibles dans les matériaux;
- une électrode négative à base d'un matériau choisi parmi l'élément $\underline{A}$ ou un matériau capable de le libérer;
- un électrolyte élaboré en un matériau vitreux. capable de transporter les ions $\underline{A}^+$ et possédant un ou plusieurs formateur communs avec le matériau vitreux de l'électrode positive.

D'une manière avantageuse l'utilisation de matériaux vitreux pour élaborer l'électrode positive et l'électrolyte permet d'éviter les problèmes rencontrés habituellement à l'interface résultant en particulier des joints de grains avec les matériaux cristalisables.

De plus l'utilisation d'un même système formateur dans l'électrolyte et le matériau de l'électrode positive permet d'obtenir une délocalisation de l'interface électrolyte-électrode grâce à la continuité des chaînes macromoléculaires du formateur depuis l'électrolyte jusqu'à l'électrode.

Selon encore un autre avantage de l'invention, les générateurs définis ci-dessus peuvent être réalisés sous forme de couches minces.

La chaine électrochimique peut être réalisée. par exemple, par évaporation sous vide d'un, de deux ou des trois constituants.

Les éléments $\underline{A}$ dans les matériaux d'électrodes positives sont insérés dans les composés vitreux de formule II

$$(1-y)F_a X_b \, Y(M_c X_d) \qquad (II)$$

dont on connaissait déjà les propriétés semiconductrices. Ces composés vitreux constituent donc une matrice pour les éléments $\underline{A}$.

Selon un aspect de grand intérêt, il s'avère que de tels composés vitreux constituent, en particulier, des structures d'accueil pour des éléments couramment utilisés pour la fabrication d'électrodes de générateurs électrochimiques, tels que les métaux alcalins plus spécialement Na ou Li, ou un métal tel que Ag.

De préférence, le métal de transition $\underline{M}$ du matériau d'électrode positive est choisi parmi V, Fe, Co, Ni, Mo, W, Ti, Cr ou Mn.

Selon un mode préféré de réalisation de l'invention, les matériaux vitreux utilisés dans les générateurs sont constitués par des oxydes.

Le système formateur commun du matériau d'électrode positive et de l'électrolyte est avantageusement choisi parmi les oxydes de silicium de phosphore, de bore ou de germanium.

Les matériaux d'électrodes peuvent comporter plusieurs systèmes formateurs de type $F_aX_b$.

Des systèmes formateurs particulièrement avantageux comprennent $P_2O_5$-$B_2O_3$, $P_2O_5$-$SiO_2$-$GeO_2$ et $P_2O_5$-$SiO_2$-$GeO_2$-$B_2O_3$.

D'autres oxydes vitreux comportent un seul système formateur comme $SiO_2$, $GeO_2$, $B_2O_3$, ou $P_2O_5$.

Des systèmes préférés comprennent $P_2O_5$, $GeO_2$ ou $SiO_2$.

Les différents types d'oxydes vitreux de l'invention permettent d'élaborer des générateurs de forces électromotrices élevées.

Selon un aspect dont on mesurera également l'intérêt, ces matériaux peuvent être fabriqués à l'air.

Dans un autre mode préféré de réalisation de l'invention les matériaux vitreux des générateurs électrochimiques sont à base de sulfures.

Ces matériaux renferment avantageusement un système formateur commun choisi parmi les sulfures de phosphore, de silicium ou de germanium.

Des sulfures préférés renferment plusieurs systèmes formateurs choisis notamment parmi, $P_2S_5$-$GeS_2$, $P_2S_5$-$SiS_2$ et $P_2S_5$-$GeS_2$-$SiS_2$.

D'autres sulfures préférés renferment un seul système formateur choisi avantageusement par exemple, parmi $P_2S_5$ ou $GeS_2$.

Les séléniures constituent un autre groupe préféré de matériaux vitreux de l'invention.

Ces séléniures peuvent renfermer également plusieurs systèmes formateurs tels que $GeSe_2$-$As_2Se_3$.

Dans d'autres matériaux un seul système formateur est présent et choisi avantageusement parmi $GeSe_2$ ou $As_2Se_3$.

Les sulfures et les séléniures ci-dessus présentent l'avantage d'une conductivité élevée et ce plus spécialement pour les séléniures.

Selon une disposition supplémentaire de l'invention afin d'améliorer, en particulier, la conductivité électronique des matériaux vitreux de formule I, ceux-ci peuvent renfermer en outre un ou plusieurs additifs de formule $E_eX_f$ dans lequel $\underline{E}$ représente: un métal alcalin, alcalino-terreux ou un métal de transition, $\underline{X}$ présente l'une des significations données pour $\underline{X}$ dans la formule I, ces significations de $\underline{X}$ étant identiques pour un matériau donné, $\underline{e}$ et $\underline{f}$ étant les indices correspondant à la stoechiométrie des éléments dans l'additif considéré. Des additifs appropriés de type oxyde comprennent $Ag_2O$, $Li_2O$, $Fe_3C_4$, $B_2O_3$, $SiO_2$, $CaO$, $MoO_3$.

L'utilisation d'un oxyde de métal alcalin favorise la diffusion du cation alcalin lorsque ce dernier est déjà présent dans le formateur du matériau d'électrode.

L'électrode négative est formée principalement du métal correspondant à l'élemet A qui doit pénétrer dans la structure vitreuse

Il s'agit avantageusement du métal sous forme pure ou d'alliage.

On utilise, en particulier, une électrode en métal alcalin.

Ce métal est alors plus spécialement constitué par Na ou encore Li.

Un autre métal utilisable est constitué par Ag.

Dans un mode préféré de réalisation de l'invention, l'électrolyte qui comprend un matériau vitreux renfermant un système formateur commun avec celui du matériau de l'électrode est choisi avantageusement parmi les matériaux décrits dans la demande de brevet FR No 82 02083 du 9 février 1982 (FR-A-2 521 125, publiée le 12 août 1983) déposée au nom du CENTRE NATIONAL DE LA RECHERCHE SCIENTIFIQUE (CNRS).

De tels électrolytes vitreux sont constitués par un matériau comportant un système formateur de réseau et un système modificateur dopé par au moins deux sels, ces sels comportant le même cation, soit le cation correspondant à celui du composé modificateur et des anions différents les une des autres.

D'une manière générale, dans ce électrolytes vitreux, mis à part le système formateur qui sera donc identique à celui des matériaux d'électrode de l'invention, le système modificateur de réseau comprend un composé de type $N_mX_n$ dans lequel $\underline{N}$ est choisi parmi Li, Na, K, Ag et $\underline{X}$ parmi O,S ou Se, les indices $\underline{m}$ et $\underline{n}$ correspondant à la stoechiométrie des constituants dans un composé donné. Quant aux éléments dopants ils sont constitués par au moins deux sels de type Nq Yp. La signification de $\underline{N}$ dans le groupe NY est identique, pour chaque sel, à celle de $\underline{N}$ dans le groupe NX. L'élément $\underline{Y}$ présente dans chacun des sels des significations différentes choisies parmi I, Br, Cl, F, $ClO_4$, $CF_3SO_3$, SCN et $SO_4$ Les indices $\underline{p}$ et $\underline{q}$ correspondent à la stoechiométrie des constituants dans un groupe NY donné.

Il est entendu que les éléments $\underline{X}$ sont identiques dans les matériaux d'électrodes positives et dans l'electrolyte pour une chaîne données.

Les potentiels d'électrodes mesurés avec des générateurs de ce type sont souvent supérieurs à ceux obtenus avec les composés cristallisés correspondants.

Cet intérêt est encore accru en raison de la réalisation aisée de ces générateurs.

Les matériaux vitreux de formule I dans laquelle $\underline{M}$ représente Ag et x un nombre non nul ainsi que ceux dans lesquels $\underline{X}$ représente du soufre ou du sélénium et x un nombre non nul sont des matériaux nouveaux et à ce titre entrent dans le cadre de l'invention.

Ces matériaux vitreux sont avantageusement obtenus par l'insertion par voie chimique en faisant réagir l'élément $\underline{A}$ en question ou un composé capable de libérer cet élément, par exemple un halogénure ou un dérivé organométallique (notamment du n-butyl lithium pour la libération de Li) avec une matrice vitreuse de type (1-y) $F_aX_b$ y$M_cX_d$, comportant éventuellement un ou plusieurs des additifs de

formule $E_eX_f$ ci-dessus. La température de la réaction ne doit pas excéder une limite correspondant à la température de recristallisation du matériau vitreux. D'une manière générale, on opère de préférence à température ambiante.

Cette réaction est effectuée, le cas échéant, en présence d'un solvant organique de type acétonitrile ou tétrahydrofuranne.

Selon une autre variante, les composés intercalaires sont fabriqués par voie électrochimique.

On utilise alors avantageusement un générateur électrochimique dont l'électrode positive comporte un matériau vitreux de formule II et l'électrode négative est à base de l'élément A que l'on désire insérer ou d'un matériau, notamment d'un alliage, capable de libérer A.

L'électrolyte est choisi parmi les matériaux non corrosifs vis-à-vis de ceux constituant les électrodes capables de transporter vers l'électrode positive les ions $A^+$ et possédant un domaine de stabilité redox compatible avec la tension du générateur obtenu. L'insertion est alors réalisée en soumettant la chaîne électrochimique ainsi constituée à un régime de décharge. Ce régime est contrôlé de manière à introduire la quantité désirée d'éléments A dans la matrice vitreuse.

Les matériaux constituant cette matrice vitreuse sont avantageusement obtenus selon les méthodes classiques par réaction des dérivés capables de fournir les oxydes, sulfures ou séléniures constituant les systèmes formateurs ou les systèmes actifs.

D'une manière avantageuse ces différentes voies d'obtention des matériaux vitreux de l'invention sont de mise en oeuvre aisée.

Pour la constitution des électrodes de l'invention, les matériaux peuvent être utilisés sous forme massive ou encore en poudre avec un mélange de conducteur électronique et de conducteur ionique.

Les générateurs ainsi constitués peuvent fonctionner dans une large gamme de températures de l'ordre de - 55°C à +300°C selon la température de transition vitreuse des matériaux utilisés.

Avantageusement on utilise ces générateurs à des températures de l'ordre de 20 à 80°C en particulier à l'ambiante.

Ils sont utilisables dans de nombreuses applications, en particulier en microélectronique notamment, dans des montres, calculatrices, microprocesseurs, mémoires et dans tout dispositif électrochimique pour des applications de faible et moyenne puissance.

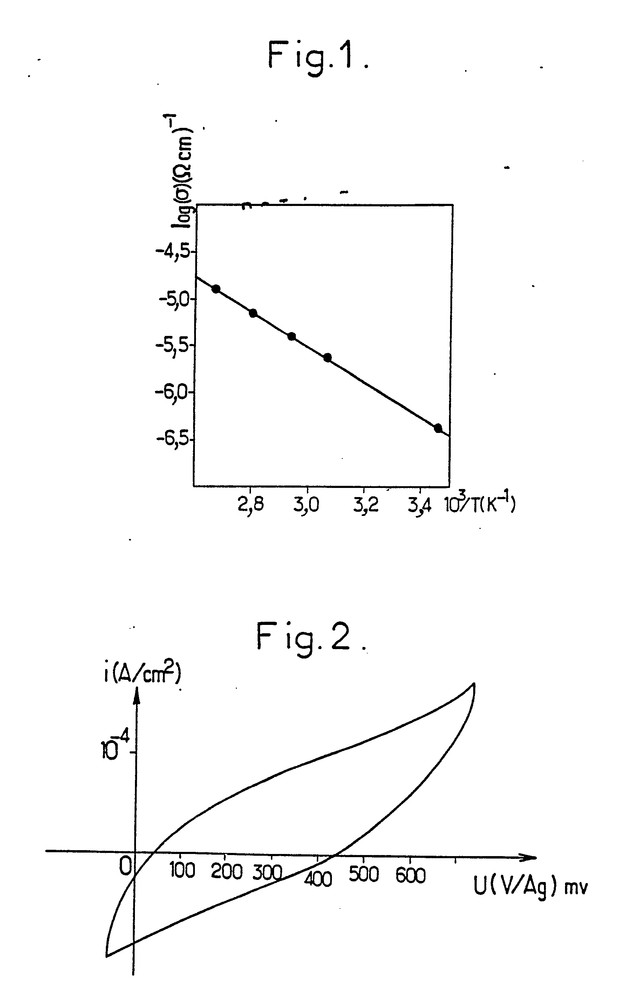

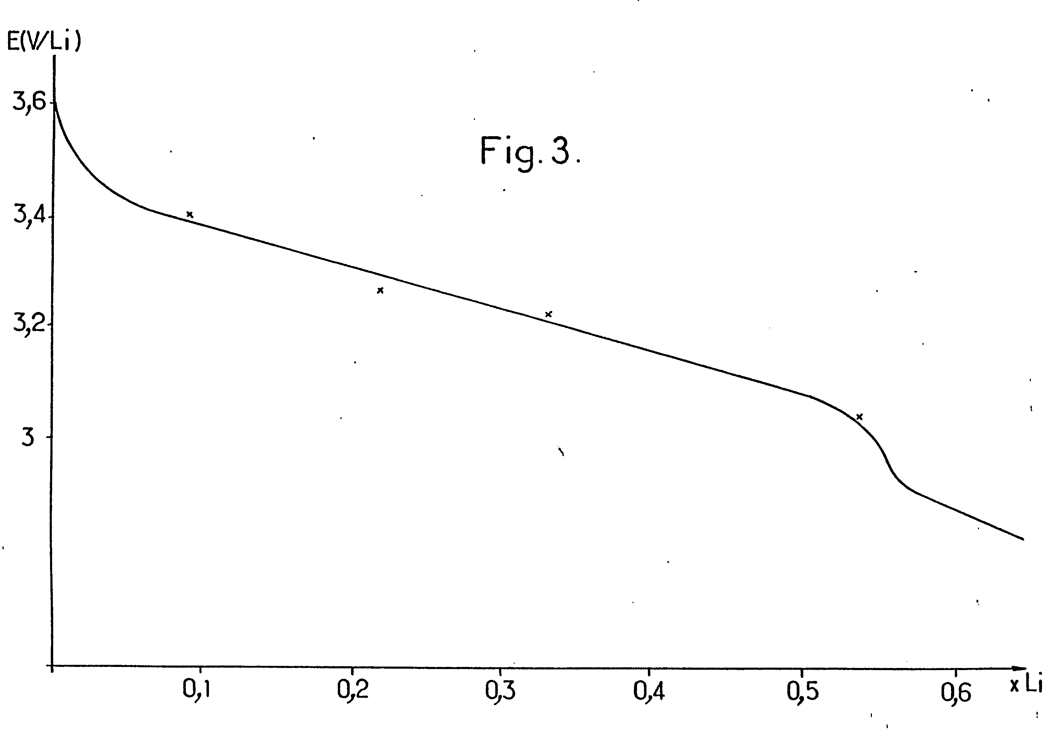

D'autres caractéristiques et avantages de l'invention apparaîtront dans les exemples qui suivent illustrant des modes de réalisation de l'invention et dans lesquels on se réfère aux figures 1 à 4 sur lesquelles on a respectivement représenté

- la courbe de la variation du logarithme de de la conductivité en $\Omega^{-1}cm^{-1}$ en fonction de $10^3T^{-1}$. T représentant la température absolue exprimée en degrés Kelvin.

- la variation de la densité de courant $A/cm^2$ en fonction du potentiel en volt pour un système donné.

- la variation du potentiel d'un matériau de l'invention en fonction de la quantité d'élément A inséré, et

- une pnoto au grossissement 2000 d'une demi-chaîne comportant une électrode positive et l'électrolyte.

**EXEMPLE 1**: Préparation du matériau vitreux $0,6V_2O_5$-

$0,4 P_2O_5$-

On mélange $V_2O_5$ et $P_2O_5$ en poudre, selon les proportions désirées pour obtenir les fractions molaires ci-dessus, en atmosphère sèche afin d'éviter l'hydratation de $P_2O_5$.

On fait fondre ensuite le mélange à 1000°C, dans un creuset en acier inoxydable (type NS 30) chauffé par effet Joule. La vitesse de montée de la température est élevée, de l'ordre de 100°C/mn, afin de limiter le dégagement de $P_2O_5$ avant réaction avec $V_2O_5$.

On affine le mélange fondu pendant environ 1/4 h. en agitant lentement toujours à 1000°C.

On verse ensuite le verre dans un moule chauffé au préalable à une température de 300°C.

On effectue un recuit pendant 5 à 6 h à 300°C pour éliminer les tensions internes.

Ce processus permet d'obtenir des échantillons cylindriques de 3 cm de long et 13 mm de diamètre.

Le verre obtenu est vert foncé très hygroscopique et se dissout aisément dans l'eau chaude. Aucune raie n'apparait à l'analyse par spectographie aux rayons X.

La nature vitreuse de la phase obtenue est confirmée par analyse thermique différentielle.

Une transition vitreuse est observée à 300°C.

Les résultats de l'analyse chimique concernant les cations, en mole % de verre de phosphovanadate sont les suivants: V/total: 62, P/total: 38, $V^{5+}$/V total: 0,75.

La teneur en V et en P est déterminée par spectrométrie d'émission dans du plasma, celle de V (V) est mesurée par réduction par $Fe^{2+}$ après dissolution dans de l'acide sulfurique dilué.

**EXAMPLE 2**: caractérisation électrique et étude

de l'insertion d'éléments alcalins avec le verre 0,6 $V_2O_5$ - 0,4 $P_2O_5$

**Caractérisation électrique**
Les résultats qui suivent concernent des mesures effectuées sur des échantillons de 2 mm d'épaisseur découpés dans les tiges cylindriques ci-dessus. Les contacts sont formés par pulvérisation cathodique d'or sous atmosphére d'argon.

La variation de la conductivité en fonction de la température suit une loi $\sigma = \sigma_0 \exp(-E\sigma/kT)$ où $\delta = 1,2\,\Omega^{-1}cm^{-1}$ et $E\sigma = 0,37$ CV. On rapporte sur la figure 1 log $\sigma$ en fonction de $10^3 \frac{1}{T}$ pour le verre en question.

La conductivité à température ambiante est de $2 \times 10^{-6}\,\Omega^{-1}cm^{-1}$.

On a mesuré le potentiel du matériau vitreux d'électrode par rapport au métal alcalin sur des cellules du type métal alcalin/électrolyte solide conducteur par ion alcalin/verre.

Le voltage en circuit ouvert est de 3,4 V pour le sodium et de 3,6 V pour le lithium.

Par rapport à des oxydes de vanadium cristallisés, ces valeurs sont supérieures d'au moins 200 à 500 mV.

**Intercalation chimique**

On écrase du verre puisson le met en suspension dans un solvant chimiquement inerte et on le traite avec un excés de sel alcalin réducreur. Pour intercaler des ions sodium, on utilise Na I dissout dans de l'acétonitrile et pour intercaler Li, une solution de LiBr dans du tétrahydrofuranne.

Après réaction, pendant une semaine, à température ambiante, on sépare le verre du solvant par filtration, on rince avec le même solvant pur et on sèche sous vide.

Toutes ces opérations sont réalisées sous atmosphère inerte d'argon purifié dont la teneur en eau et en oxygène est inférieure à 1 ppm.

Les sels NaI et LiBr sont désséches sous vide à 200°C avant utilisation.

Les solvants sont conservés sur tamis moléculaire (THF desséché et ACH/acétonitrile pour spectrocospie commercialisés par MERK).

On observe la réaction d'intercalation en quelques minutes par coloration du solvant par les composés halogénés et par changement de couleur du verre du vert au noir.

La réaction d'intercalation est la suivante:

$$MX + <V^{5+}> \text{ verre} \rightleftarrows <M^+V^{4+}> \text{ verre} + \tfrac{1}{2} X_2$$

M représentant Na ou Li, X, I ou Br et le symbole < > la phase solide.

Le produit obtenu après réaction est amorphe aux rayons X. Sa composition en % de phosphovanadate déterminée par analyse chimique est la suivante: V/total = 54; P/total = 33, $V^{5+}$/V total = 0,55, Na = 13 et Fe = 0,050

Ces résultats montrent que le nombre d'ions alcalins intercalés est proche du nombre d'atomes de vanadium réduits.

Le rapport du nombre d'atomes de sodium au nombre de $V^{5+}$ réduits est en effet de 1,1. Les rapports molaires métal alcalin/vanadium sont semblables pour le lithium et le sodium. Na/V = 0,25 et Li/V = 0,20 alors que l'utilisation du réactif le plus réducteur donne le rapport intercalaire le plus élevé.

**EXEMPLE 3**: Insertion d'argent dans des matériaux vitreux è base de phosphovanadates utilisés comme matériaux d'électrodes positives dans des générateurs électrochimiques

On rapporte ci-après les tensions et les densités de courant obtenues avec les trois chaînes électrochimiques suivantes:

$Ag/Ag_2O-B_2O_3-P_2O_5/0,6\ V_2O_5-0,4\ P_2O_5$

$Ag/0,33Ag_2O-0,66(0,4\ B_2O_3-0,6P_2O_5)/0,6V_2O_5-0,4P_2O_5$

$Ag/0,8(0,33Ag_2O-0,67(0,4B_2O_3-0,6P_2O_5)0,2AgI/0,8V_2O_5-0,2P_2O_5$

Avec les deux premières chaînes on observe des tensions de l'ordre de 350 mV et des densités de courant de l'ordre de $10^{-4}A/cm^2$ à température ambiante. La tension obtenue à l'aide de la troisième chaîne est voisine de 150 mV et la densité de courant de l'ordre de $10^3A/cm^2$ toujours à température ambiante.

Sur la figure 2, on a rapporté la variation de la densité de courant en $A/cm^2$ en fonction du potentiel en mV (par rapport à l'argent). L'examen de cette courbe montre la remarquable réversibilité de fonctionnement du matériau vitreux de l'invention.

Sur la figure 3, on a représenté la courbe du potentiel à l'équilibre du système Li (polyoxyéthylène) $LiClO_4/0,6V_2O_5 - 0,4P_2O_5$ en fonction du nombre d'atomes de Li insérés. Les potentiels obtenus sont supérieurs à 3V.

**EXAMPLE 4**: Utilisation de sulfures vitreux dans des chaînes électrochimiques au lithium

En opérant selon les techniques classiques on constitue une chaîne $Li/0,35\ GeS_2-0,15\ Li_2S-0,5\ Li\ I/0,8\ VS_2 0,2\ P_2S_5$.

La tension obtenue est d'environ 2,7 V par rapport au lithium à 20°C.

L'ensemble des résultats qui précèdent montre les avantages des matériaux vitreux ci-dessus en tant que matériaux d'électrodes positives. Leur structure vitreuse permet une synthèse et une mise en oeuvre aisée, en particulier, sous forme de poudres de dimensions de l'ordre du micron. On remarquera de plus que, grâce à leur structure isotrope ces matériaux offrent une surface électrochimiquement active plus importante que celles des structures cristallines.

D'une manière avantageuse, il s'avère, en outre, que les matériaux vitreux à conduction ionique présentent de bonnes conductivités suggérant un coefficient de diffusion élevé de l'ion se déplaçant dans la structure (environ $10^{-9}$ à $10^{-8}$ $cm^2/s$).

Ces matériaux présentent encore l'intérêt compte-tenu de leur faible densité d'offrir un grand nombre de sites disponibles pour l'insertion des éléments A. Leur utilisation comme matériaux d'électrodes positives dans des générateurs secondaires solides permet ainsi d'assurer de bons contacts lors des cycles de charge et de décharge.

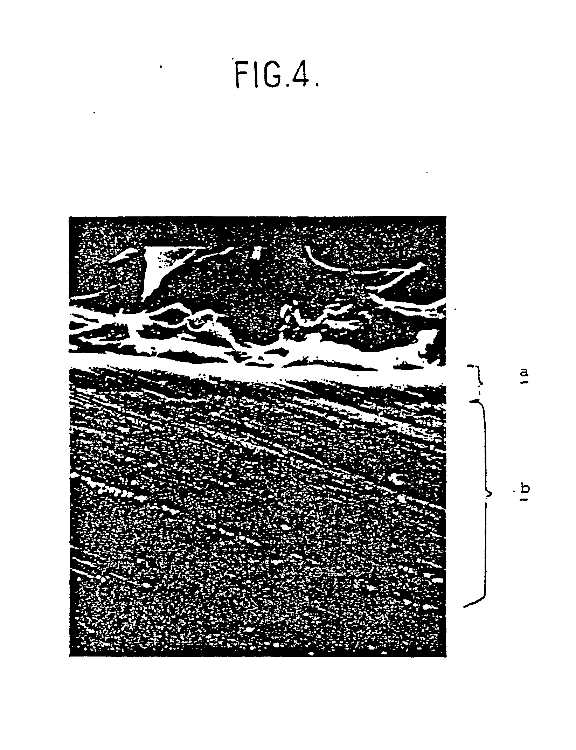

Sur la figure 4 on a représenté une photo au grossissement 2000 correspondant à une demi-chaîne 0,8 (0,33 $Ag_2O$-0,67 (0,4$B_2O_3$-0,6 $P_2O_5$) 0,2 Ag I/0,8$V_2O_5$-0,2 $P_2O_5$. Cette photo, sur laquelle $\underline{a}$ correspond à l'électrode positive et $\underline{b}$ à l'électrolyte, montre l'absence de discontinuité entre les deux matériaux, ce qui prouve la qualité du contact établi.

Par insertion de lithium dans des électrodes positives formées de phosphovanadates de phosphotungstates ou de phosphomolybdates on a réalisé les chaînes suivants;

Li/0,33 $Li_2O$-0,33 $P_2O_5$-0,34 LiI/0,6 $V_2O_5$-0,4 $P_2O_5$
Li/0,33 $Li_2O$-0,33 $P_2O_5$-0,34 LiI/0,4 $WO_3$-0,6 $P_2O_5$
Li/0,33 $Li_2O$-0,33 $P_2O_5$-0,34 LiI/0,6 $MoO_3$-0,4 $P_2O_5$
Li/0,6 (0,3 $Li_2O$-0,7 $P_2O_5$) 0,2 LiCl 0,2 LiBr/0,6 $V_2O_5$-0,4 $P_2O_5$

## Revendications

1. Générateurs électrochimiques comportant:
- une électrode positive à base d'un matériau vitreux de formule générale I

$$A_x(1-y) \ F_aX_b \ Y \ M_cX_d \qquad (I)$$

dans laquelle:

$F_a X_b$ représente un ou plusieurs systèmes formateurs de réseau et $M_cX_d$ un système dit actif, c'est-à-dire capable de capter ou de fournir des électrons, dans lesquels:

$\underline{F}$ est un élément choisi parmi Si, Ge, B, P, Al, Nb, As ou Sb;

$\underline{M}$ représente un metal de transition pouvant exister sous plusieurs degrés d'oxydation de + 1 à +7 et existant dans le matériau vitreux de l'électrode positive sous du moins deux des degrés d'oxydation qu'il peut présenter;

$\underline{X}$ représente de l'oxygène, du soufre ou du sélénium;

$\underline{a}$, $\underline{b}$, $\underline{c}$ et $\underline{d}$ sont les indices correspondant à la stoechiométrie des éléments dans le système formateur ou dans le système actif considéré;

$\underline{y}$ est un nombre compris entre 0 et 1 (ces deux valeurs étant exclues);

$\underline{A}$ représente un élément alcalin ou de l'argent monovalent;

$\underline{x}$ est nul ou représente un nombre non nul dont la valeur dépend du nombre d'électrons et/ou des sites électroniques ques disponibles dans les matériaux;

- une électrode négative à base d'un matériau choisi parmi l'élément $\underline{A}$ ou un marériau capable de le libérer,
- un électrolyte élaboré en un matériau vitreux capable de transporter les ions A+ et possédant un/ou plusieurs formateurs communs avec le matériau vitreux de l'électrode positive.

2. Générateurs selon la revendication 1, caractérisés en ce que $\underline{M}$ est choisi parmi V, Fe, Co, Ni, Mo, W, Ti, Cr ou Mn.

3. Générateurs selon la revendication 1, caractérisés en ce que $\underline{A}$ représente Na ou Li.

4. Générateurs selon la revendication 1, caractérisés en ce que $\underline{X}$ représente de l'oxygène.

5. Générateurs selon la revendication 4, caractérisés en ce que les matériaux vitreux de l'électrode positive et de l'électrolyte renferment un ou plusieurs oxydes formateurs communs choisis parmi les oxydes de silicium, de bore, de phosphore et de germanium.

6. Générateurs selon la revendication 4, caractérisés en ce que les matériaux vitreux de l'électrode positive et de l'électrolyte renferment un système formateur commun choisi parmi:
$P_2O_5$-$B_2O_3$; $P_2O_5$-$SiO_2$-$GeO_2$; $P_2O_5$-$SiO_2$-$GeO_2$-$B_2O_3$; $SiO_2$; $GeO_2$; $B_2O_3$; $P_2O_5$ ou $SiO_2$-$B_2O_3$.

7. Générateurs selon la revendication 1, caractérisés en ce que $\underline{X}$ représente du soufre.

8. Générateurs selon la revendication 7, caractérisés en ce que les matériaux vitreux de l'électrode positive et de l'électrolyte renferment un ou plusieurs sulfures communs choisis parmi les sulfures de phosphore, de silicium et de germanium.

9. Générateurs selon la revendication 7, caractérisés en ce que les matériaux vitreux de l'électrode positive et de l'électrolyte renferment un système formateur commun choisi parmi $P_2S_5$, $GeS_2$, $P_2S_5$-$GeS_2$, $P_2S_5$-$SiS_2$ ou $P_2S_5$-$GeS_2SiS_2$.

10. Générateurs selon la revendication 1, caractérisés en ce que $\underline{X}$ représente du sélénium.

11. Générateurs selon la revendication 10, caractérisés en ce que le système formateur du matériau vitreux de l'électrolyte et de l'électrode positive est constitué par $GeSe_2$, $As_2Se_3$ ou leur mélange.

12. Générateurs selon la revendication 1, caractérisés en ce que les matériaux de l'électrode positive comportent, en outre, un ou plusieurs additifs de formule $E_eX_f$ dans lequel $\underline{E}$ représente un métal alcalin, alcalino-terreux ou un métal de transition, $\underline{X}$ présente l'une des significations données pour $\underline{X}$ dans la formule I, ces significations étant identiques pour un matériau donné, $\underline{e}$ et $\underline{f}$ étant les indices correspondant à la stoechiométrie des éléments dans l'additif considéré.

13. Générateurs selon la revendication 1, caractérisés en ce que l'électrolyte comprend un matériau vitreux comportant un système formateur de réseau et un système modificateur de réseau, dopé par au moins deux sels comprenant le même cation que celui du système modificateur.

14. Générateurs selon la revendication 14, caractérisés en ce que le système modificateur de réseau comprend un composé de formule $N_mX_n$ dans lequel $\underline{N}$ est choisi parmi Li, Na, K, Ag et $\underline{X}$ parmi O, S ou Se, les indices $\underline{m}$ et $\underline{n}$ correspondant à la stoechiométrie des constituants dans un composé donné et que les éléments dopants sont constitués par au moins deux sels de formule $N_q Y_p$ dans laquelle $\underline{N}$ dans le groupe NY, est identique, pour chaque sel, à celle de $\underline{N}$ dans le groupe NX, l'élément $\underline{Y}$ présente dans chacun des sels des significations différentes choisies parmi I, Br, Cl, F, $ClO_4$, $CF_3SO_3$, SCN et $SO_4$, les indices $\underline{m}$, $\underline{p}$ et $\underline{q}$ correspondent à la stoechiométrie des constituants dans un groupe NY donné.

15. Générateurs selon la revendication 1 caractérisés en ce qu'ils comportent une chaîne choisie parmi:

Li/0,33 Li$_2$O-0,33 P$_2$O$_5$-0,34 LiI/0,6 V$_2$O$_5$-0,4 P$_2$O$_5$

Li/0,33 Li$_2$O-0,33 P$_2$O$_5$-0,34 LiI/0,4 WO$_3$-0,6 P$_2$O$_5$

Li/0,33 Li$_2$O-0,33 P$_2$O$_5$-0,34 LiI/0,6 MoO$_3$-0,4 P$_2$O$_5$

Li/0,6 (0,3 Li$_2$O-0,7 P$_2$O$_5$) 0,2 LiCl 0,2 LiBr/0,6 V$_2$O$_5$-0,4 P$_2$O$_5$.

Ag/Ag$_2$O-B$_2$O$_3$-P$_2$O$_5$/0,6 V$_2$O$_5$-0,4 P$_2$O$_5$

Ag/0,33Ag$_2$O-0,66(0,4 B$_2$O$_5$-0,6 P$_2$O$_5$)/0,6 V$_2$O$_5$-0,4 P$_2$O$_5$

Ag/0,8(0,33Ag$_2$O-0,66(0,4 B$_2$O$_3$-0,6 P$_2$O$_5$) 0,2 AgI/0,8 V$_2$O$_5$-0,2 P$_2$O$_5$ ou

Li/0,35 GeS$_2$-0,15 Li$_2$S-P$_2$S$_5$-0,5 Li I/0,8 VS$_2$ · 0,2 P$_2$S$_5$.

16. Matériaux vitreux caractérisés en ce qu'ils répondent à la formule I, telle que définie dans la revendication 1,dans laquelle $\underline{A}$ représente Ag et $\underline{x}$ est un nombre non nul.

17. Matériaux vitreux caractérisés en ce qu'ils répondent à la formule I, telle que définie dans la revendication 1, dans laquelle $\underline{X}$ représente du soufre ou du sélénium et x est un nombre non nul.

18. Procédé de fabrication des matériaux vitreux mis en oeuvre pour constituer les électrodes positives des générateurs selon l'une quelconque des revendications 1 à 14, caractérisé en ce que l'on effectue l'insertion de l'élément $\underline{A}$ par voie chimique, en faisant réagir l'élément $\underline{A}$ en question, ou un composé capable de libérer cet élement, par example, un halogénure ou un dérivé organométallique (notamment du n-butyllithium pour la libération de Li) avec une matrice vitreuse de formule II (1-y) $F_a X_b$ y$M_c X_d$, comportant éventuellement un ou plusieurs des additifs de formule $E_e X_f$, telle que définie dans la revendication 12, ou par voie électrochimique à l'aide d'un générateur électrochmique dont l'électrode positive comporte un matériau vitreux de formule II et l'électrode négative est à base de l'élément $\underline{A}$ que l'on désire insérer ou d'un matériau, notamment d'un alliage, capable de libérer $\underline{A}$.

**Patentansprüche**

1. Elektrochemische Generatoren, umfassend:
- eine positive Elektrode auf der Basis eines glasartigen Materials der allgemeinen Formel I

$$A_x (1-y) F_a X_b Y M_c X_d \qquad (I)$$

worin

$F_a X_b$ ein oder mehrere netzbildende Systeme darstellt und

$M_c X_d$ ein sogenanntes aktives System ist, d.h. ein System, welches befähigt ist, Elektronen abzuziehen oder zu liefern, wobei

- F ein aus Si, Ge, B, P, Al, Nb, As oder Sb ausgewähltes Element ist;

- M ein Übergangsmetall darstellt, welches in mehreren Oxydationsstufen von +1 bis +7 vorliegen kann und welches in dem glasartigen Material der positiven Elektrode in wenigstens zweien der Oxydationsstufen, in denen es vorliegen kann, vorhanden ist;

- X Sauerstoff, Schwefel oder Selen darstellt;

- a, b, c und d Indices entsprechend der Stöchiometrie der Elemente in dem in Betracht gezogenen netzbildenden System oder in dem in Betracht gezogenen aktiven System sind;

- y eine Zahl zwischen 0 und 1 darstellt (wobei diese beiden Werte ausgeschlossen sind);

- A ein Alkalimetall oder einwertiges Silber bedeutet;

- x Null ist oder eine von Null verschiedene Zahl darstellt, deren Wert von der in den Materialien verfügbaren Anzahl von Elektronen und/oder Elektronenstellen abhängt;

- eine negative Elektrode auf der Basis eines Materials, welches aus dem Element A oder einem Material ausgewählt ist, welches befähigt ist, A freizusetzen;

- einen aus einem glasartigen Material gebildeten Elektrolyten, welcher befähigt ist, die Ionen $A^+$ zu transportieren, und welcher einen oder mehrere gemeinsame Netzbildner mit dem glasartigen Material der positiven Elektrode aufweist.

2. Generatoren nach Anspruch 1, dadurch gekennzeichnet, daß M aus V, Fe, Co, Ni, Mo, W, Ti, Cr oder Mn ausgewählt ist.

3. Generatoren nach Anspruch 1, dadurch gekennzeichnet, daß A Na oder Li darstellt.

4. Generatoren nach Anspruch 1, dadurch gekennzeichnet, daß X Sauerstoff darstellt.

6. Generatoren nach Anspruch 4, dadurch gekennzeichnet, daß die glasartigen Materialien der positiven Elektrode und des Elektrolyten ein oder mehrere gemeinsame netzbildende Oxide, ausgewählt aus den Oxiden von Silicium, Bor, Phosphor und Germanium, enthalten.

6. Generatoren nach Anspruch 4, dadurch gekennzeichnet, daß die glasartigen Materialien der positiven Elektrode und des Elektrolyten ein gemeinsames netzbildendes System enthalten, welches ausgewält ist aus:

P$_2$O$_5$-B$_2$O$_3$; P$_2$O$_5$-SiO$_2$-GeO$_2$ P$_2$O$_5$-SiO$_2$-GeO$_2$-B$_2$O$_3$; SiO$_2$; GeO$_2$;B$_2$O$_3$; P$_2$O$_5$ oder SiO$_2$-B$_2$O$_3$.

7. Generatoren nach Anspruch 1, dadurch gekennzeichnet, daß X Schwefel darstellt.

8. Generatoren nach Anspruch 7, dadurch gekennzeichnet, daß die glasartigen Materialien der positiven Elektrode und des Elektrolyten ein oder mehrere gemeinsame Sulfide, ausgewählt aus den Sulfiden des Phosphors, Siliciums und Germaniums, enthalten.

8. Generatoren nach Anspruch 7, dadurch gekennzeichnet, daß die glasartigen Materialien der positiven Elektrode und des Elektrolyten ein gemeinsames netzbildendes System enthalten, welches ausgewählt ist aus: $P_2S_5$, $GeS_2$, $P_2S_5$-$GeS_2$, $P_2S_5$-$SiS_2$ oder $P_2S_5$-$GeS_2$-$SiS_2$.

10. Generatoren nach Anspruch 1, dadurch gekennzeichnet, daß X Selen darstellt.

11. Generatoren nach Anspruch 10, dadurch gekennzeichnet, daß das netzbildende System des glasartigen Materials des Elektrolyten und der positiven Elektrode aus $GeSe_2$, $As_2Se_3$ oder einem Gemisch davon besteht.

12. Generatoren nach Anspruch 1, dadurch gekennzeichnet, daß die Materialien der positiven Elektrode unter anderem einen oder mehrere Zusätze der Formel $E_eX_f$ enthalten, worin E ein Alkalimetall, Erdalkalimetall oder ein Übergangsmetall darstellt, X eine der Bedeutungen hat, die für X im Zusammenhang mit der Formel I angegeben worden sind, wobei diese Bedeutungen für ein gegebenes Material identisch sind, und e und f die Indices sind, die der Stöchiometrie der Elemente in dem in Betracht gezogenen Zusatz entsprechen.

13. Generatoren nach Anspruch 1, dadurch gekennzeichnet, daß der Elektrolyt ein glasartiges Material umfaßt, welches ein netzbildendes System und ein netzmodifizierendes System enthält, welches mit wenigstens zwei Salzen dotiert ist, welche das gleiche Kation wie jenes des modifizierenden Systems enthalten.

14. Generatoren nach Anspruch 13, dadurch gekennzeichnet, daß das das Netz modifizierende System eine Verbindung der Formel $N_mX_n$ enthält, worin N aus Li, Na, K und Ag ausgewählt ist, und X aus O, S oder Se ausgewählt ist, wobei die Indices m und n der Stöchiometrie der Bestandteile in einer gegebenen Verbindung entsprechen, und daß die Dotierungselemente aus wenigstens zwei Salzen der Formel $N_qY_p$ bestehen, worin N in der Gruppe NY für jedes Salz mit der betreffenden Bedeutung von N in der Gruppe NX identisch ist und wobei das Element Y in jedem der Salze unterschiedliche Bedeutungen hat, welche ausgewählt sind aus I, Br, Cl, F, $ClO_4$, $CF_3SO_3$, SCN und $SO_4$, und wobei die Indices m, p und q der Stöchiometrie der Bestandteile in einer gegebenen Gruppe NY entsprechen.

15. Generatoren nach Anspruch 1, dadurch gekennzeichnet, daß sie eine Kette enthalten, welche ausgewählt ist aus:

Li/0,33 $Li_2O$-0,33 $P_2O_5$-0,34 LiI/0,6 $V_2O_5$-0,4 $P_2O_5$
Li/0,33 $Li_2O$-0,33 $P_2O_5$-0,34 LiI/0,4 $WO_3$-0,6 $P_2O_5$
Li/0,33 $Li_2O$-0,33 $P_2O_5$-0,34 LiI/0,6 $MoO_3$-0,4 $P_2O_5$
Li/0,6 (0,3 $Li_2O$-0,7 $P_2O_5$) 0,2 LiCl 0,2 LiBr/0,6 $V_2O_5$-0,4 $P_2O_5$
Ag/$Ag_2O$-$B_2O_3$-$P_2O_5$/0,6 $V_2O_5$-0,4 $P_2O_5$
Ag/0,33 $Ag_2O$-0,66(0,4 $B_2O_3$-0,6 $P_2O_5$)/0,6 $V_2O_5$-0,4 $P_2O_5$
Ag/0,8(0,33 $Ag_2O$-0,66(0,4 $B_2O_3$-0,6 $P_2O_5$)0,2 AgI/0,8 $V_2O_5$-0,2 $P_2O_5$
oder
Li/0,35 $GeS_2$-0,15 $Li_2S$-$P_2S_5$-0,5 Li I/0,8 $VS_2 \cdot$ 0,2 $P_2S_5$.

16. Glasartige Materialien, dadurch gekennzeichnet, daß sie der im Anspruch 1 definierten Formel I entsprechen, in welcher A für Ag steht und x eine von Null verschiedene Zahl darstellt.

17. Glasartige Materialien, dadurch gekennzeichnet, daß sie der im Anspruch 1 definierten Formel I entsprechen, in welcher X Schwefel oder Selen darstellt, und x eine von Null verschiedene Zahl darstellt.

18. Verfahren zur Herstellung von glasartigen Materialien, die zum Aufbau der positiven Elektroden der Generatoren nach einem der Ansprüche 1 bis 14 eingesetzt werden, dadurch gekennzeichnet, daß man den Einbau des Elementes A auf chemischem Wege bewirkt, wobei man das in Frage kommende Element A oder eine Verbindung, welche zur Freisetzung dieses Elementes befähig ist, z. B. ein Halogenid oder ein metallorganisches Derivat (insbesondere n-Butyllithium für die Freisetzung von Li), mit einer glasartigen Matrix der Formel II:

$$(1\text{-}y)\ F_aX_b\ YM_cX_d \tag{II}$$

umsetzt, welche Matrix gegebenenfalls einen oder mehrere Zusätze der im Anspruch 12 definierten Formel $E_eX_f$ enthält, oder daß man den Einbau des Elementes auf elektrochemischem Wege mit Hilfe eines elektrochemischen Generators bewirkt, dessen positive Elektrode ein glasartiges Material der Formel II enthält, und dessen negative Elektrode auf der Basis des Elementes A aufgebaut ist, welches man einzubauen wünscht, oder auf der Basis eines Materials, insbesondere einer Legierung, aufgebaut ist, welches Material bzw. welche Legierung zur Freisetzung von A befähig ist.

**Claims**

1. Electrochemical generators, comprising - a positive electrode based on a vitreous material of general formula I

$$A_x(1\text{-}y)\ F_aX_b\ Y\ M_cX_d \tag{I}$$

in which
$F_aX_b$ represents one or several network forming system and
$M_cX_d$ a so-called active system, that is to say capable of capturing or providing electrons, in which:

- F is an element selected from among Si, Ge, B, P, Al, Nb, As or Sb;
- M represents a transition metal which can exist in several degrees of oxidation from 0 to +7 and existing in the vitreous material of the positive electrode in at least two of the degrees of oxidation that it may represent;
- X represents oxygen, sulfur or selenium;
- a, b, c and d are indices corresponding to the stoichiometry of the elements in the forming system or in the active system concerned;

- $y$ is a number comprised between 0 and 1 (these two values being excluded);

- $A$ represents an alkaline element or monovalent silver;

- $x$ is nil or represents a number not nil of which the value depends on the number of electrons and/or electron sites available in the materials;

- a negative electrode based on a material selected from the group comprising the element $A$ or a material capable of separating it;

- an electrolyte formed from a vitreous material, which can transport the $A^+$ ions and possessing one or several former common with the vitreous material of the positive electrode.

2. Generators according to claim 1, characterized in that $M$ is selected from the group comprising V, Fe, Co, Ni, Mo, W, Ti, Cr or Mn.

3. Generators according to claim 1, characterized in that A represents Na or Li.

4. Generators according to claim 1, characterized in that $X$ represents oxygen.

5. Generators according to claim 4, characterized in that the vitreous materials of the positive electrode and of the electrolyte contain one or several common forming oxides selected from the group comprising oxides of silicon, boron, phosphorus and germanium.

6. Generators according to claim 4, characterized in that the vitreous materials of the positive electrode and of the electrolyte contain a common forming system selected from:
$P_2O_5$-$B_2O_3$, $P_2O_5$-$SiO_2$-$GeO_2$; $P_2O_5$-$SiO_2$-$GeO_2$-$B_2O_3$; $SiO_2$; $GeO_2$; $B_2O_3$; $P_2O_5$ or $SiO_2$-$B_2O_3$

7. Generators according to claim 1, characterized in that $X$ represents sulfur.

8. Generators according to claim 7, characterized in that the vitreous material of the positive electrode and of the electrolyte contain one or several common sulfides selected from the sulfides of phosphorus, silicon and germanium.

9. Generators according to claim 7, characterized in that the vitreous materials of the positive electrode and of the electrolyte contain a common forming system selected from $P_2S_5$, $GeS_2$, $P_2S_5$-$GeS_2$, $P_2S_5$-$SiS_2$ or $P_2S_5$-$GeS_2$-$SiS_2$.

10. Generators according to claim 1, characterized in that $X$ represents selenium.

11. Generators according to claim 10, characterized in that the forming system of the vitreous material of the electrolyte and of the positive electrode is constituted by $GeSe_2$, $As_2Se_3$ or their mixture.

12. Generators according to claim 1, characterized in that the materials of the positive electrode comprise, in addition, one or several additives of the type $E_eX_f$ in which $E$ represents an alkali, an alkaline earth metal or a transition metal, $X$ has one of the meanings given for $X$ in the formula I, these meanings being identical for a given material $e$ and $f$ being indices corresponding to the stoichiometry of the elements in the additive concerned.

13. Generators according to claim 1, characterized in that the electrolyte comprises a vitreous material containing a network forming system and a network modifiying system, doped by at least two salts comprising the same cation as that of the modifying system.

14. Generators according to claim 13, characterized in that the network modifying system comprises a compound of the type $N_mX_n$ in which $N$ is selected from among Li, Na, K, Ag and $X$ from among O, S or Se, the indices $m$ and $n$ corresponding to the stoichiometry of the constituents in a given compound and that the doping elements are constituted by at least two salts of the formula $N_qY_p$ in which $N$ in the group NY is identical, for each salt, with that of $N$ in the group NX, the element $Y$ presents in each of the salts different meanings selected from among I, Br, Cl, F, $ClO_4$, $CF_3SO_3$, SCN and $SO_4$, the indices $m$, $p$ and $q$ correspond to the stoichiometry of the constituents in a given group NY.

15. Generators according to claim 1, characterized in that they comprise a chain selected from among:
Li/0,33 $Li_2O$-0,33 $P_2O_5$-0,34 LiI/0,6 $V_2O_5$-0,4 $P_2O_5$
Li/0,33 $Li_2O$-0,33 $P_2O_5$-0,34 LiI/0,4 $WO_3$-0,6 $P_2O_5$
Li/0,33 $Li_2O$-0,33 $P_2O_5$-0,34 LiI/0,6 $MoO_3$-0,4 $P_2O_5$
Li/0,6 (0,3 $Li_2O$-0,7 $P_2O_5$) 0,2 LiCl 0,2 LiBr/0,6 $V_2O_5$-0,4 $P_2O_5$
Ag/$Ag_2O$-$B_2O_3$-$P_2O_5$/0,6 $V_2O_5$-0,4 $P_2O_5$
Ag/0,33$Ag_2O$-0,66 (0,4 $B_2O_3$-0,6 $P_2O_5$)/0,6 $V_2O_5$-0,4 $P_2O_5$
Ag/0,8(0,33 $Ag_2O$-0,66(0,4 $B_2O_3$-0,6 $P_2O_5$) 0,2 AgI/0,8 $V_2O_5$-0,2 $P_2O_5$ or
Li/0,35 $GeS_2$-0,15 $Li_2S$-$P_2S_5$-0,5 Li I/0,8 $VS_2 \cdot$ 0,2 $P_2S_5$.

16. Vitreous materials characterized in that they correspond to formula I, such as defined in claim 1, in which $A$ represents Ag and $x$ is a number not nil.

17. Vitreous materials characterized in that they correspond to formula I such as defined in claim 12, in which $X$ represents sulfur or selenium and $x$ is a number not nil.

18. A process for making vitreous materials used for elaborating positive electrodes of generators according to anyone of claims 1 to 14, characterized in that the insertion of element $A$ is carried out by a chemical way, by reacting said element $A$, or a compound capable of liberating said element, for example, an halogenide or an organometallic derivative (especially n-butyllithium for liberation of Li) with a vitreous matrix of formula II

$$(1-y) \, F_aX_b \, yM_cX_d \qquad (II)$$

optionally comprising one or several additives of formula $E_eX_f$ such as defined in claim 12, or by an electrochemical way with an electrochemical generator the positive electrode of which comprises a vitreous material of formula II and the negative electrode is based on the element $A$

to be inserted or on a material, especially an alloy, capable of liberating $\underline{A}$.

# Fig.1.

# Fig.2.

Fig. 3.

# FIG.4.

a

b